# EUROPEAN PATENT APPLICATION

(11) **EP 1 310 348 A1**
(43) Date of publication of application: **14.05.2003**
(21) Application number: 01945768.8
(22) Date of filing: 02.07.2001
(51) Int. Cl.: B29C 65/70, B29C 45/26, C04B 35/52, B29K 61/04

(54) **BONDING METHOD**

(30) Priority: 03.07.2000 JP 2000201565
(71) Applicant: Cluster Technology Co., Ltd, Higashiosaka-shi, Osaka 577-0836 (JP)
(72) Inventor: ADACHI, Minoru, Higashiosaka-shi Osaka 577-0836 (JP); UESUGI, Shoji, igashiosaka-shi Osaka 577-0836 (JP)
(74) Representative: VOSSIUS & PARTNER
(86) International application number: JP0105728
(87) International publication number: WO02002297

(57) **Abstract**

The present invention provides a method that allows ultra-precisely bonding by which a complete sealingly bonded molded article can be produced in a simple manner. This method includes (1) fixing an injection molded article (a) at a position (predetermined bonding position) formed with a mold; (2) mounting and moving a molded article (b) to be bonded to the injection molded article (a) to the predetermined bonding position within the mold; (3) positioning the molded article (b) at the predetermined bonding position ; and (4) closing the mold for bonding.

## Description

### Technical Field

The present invention relates to a method for producing a molded article having a hollow portion. More specifically, the present invention relates to a method for forming a molded structure that requires a hollow portion that is too small to be formed by blowing molding.

### Background Art

In recent years, as research on medical and biochemical research fields, especially gene therapy or genetic engineering, has made progress, mixing a very small amount of reagents has been increasingly required. Therefore, dispensing methods are required to be shifted from conventional syringe methods to methods in which a very small amount of droplets can be dispensed. In the field of micro-pumps having a microscopic structure, the need for highly integrated inkjet heads having a narrow nozzle pitch for high speed processing that are made of an anticorrosion (chemical resistance) material has increased. Thus, there is an increasing demand for a molded article having a micro-hollow portion.

In general, a hollow molded article is produced by a method such as a blowing molding in which gas such as air or nitrogen gas is blown into a molded structure while a resin is extruded. When forming a desired shape in the internal portion, individual molded articles are bonded with an adhesive or are joined by a method such as ultrasonic waves or melting. These blowing molding, bonding, joining techniques are effective for comparatively large molded structure, but they are not appropriate for molding a fine and precise structured product. For example, molded structures formed by blowing have drawbacks in that the thickness of a resin is varied depending on the gas pressure or the gas amount or that a precise form cannot be produced inside.

Furthermore, a bonding method is not suitable for production of microscopic structures because the following problems, for example, are caused: When the amount of adhesive is small, the sealing properties are lost; when the amount of an adhesive is too large, the adhesive goes beyond the limit so as to fill a necessary space; and bonding may be prevented by foreign matters such as dust being attached onto a surface to be bonded. These problems become serious when mass production is performed. In addition, since it is necessary to provide the bonding process separately, the cost of process management is high.

Therefore, there is a demand for a new method for producing a molded structure having a hollow portion, especially, a hollow portion having a microscopic structure.

On the other hand, a molded article for producing a device such as a micro-pump for medical treatment or biotechnology should have chemical resistance, biochemical stability and strength. Examples of such a molded article include a carbon molded article formed of high density polycrystal carbon obtained from pitch or coke, or a carbon molded article obtained by compression molding using a thermosetting resin powder at high pressure and heating to form molded article, and carbonizing the molded article by calcination. However, in the production of these carbon molded articles, the powder may not be filled completely into the mold, so that bridges occur between the powder. Therefore, granular structures, which are contours of powder, tend to occur. The granular structures cause cracks in the molded article or reduce the strength.

Therefore, it is desired to achieve a method for producing a molded article with a hollow portion having a microscopic structure that has excellent chemical resistance and high strength in a simple manner.

### Disclosure of Invention

The present invention is conducted to solve the above-described problems, and the present invention solves the above-described problems. The present invention is directed to a method for producing a molded article having a hollow portion comprising the steps of: (1) fixing an injection molded article (a) at a position (predetermined bonding position) formed with a mold; (2) mounting and moving a molded article (b) to be bonded to the injection molded article (a) to the predetermined bonding position within the mold; (3) positioning the molded article (b) at the predetermined bonding position ; and (4) closing the mold for bonding.

In a preferable embodiment, the molded article (b) is an injection molded article (b'), and a predetermined bonding surface of the injection molded article (a) or (b') is projected so that a pressure during bonding is sufficiently transmitted to the predetermined bonding surface, and an excessive pressure is released at a parting surface of the mold.

In a preferable embodiment, the pressure during bonding is pressure of an ejecting pin, pressure of a piezo device set within the mold or pressure by external pressure generating means connected to the mold.

In a further preferable embodiment, the method further comprises the step of (5) subjecting a bonding surface to an ultraviolet ray irradiation treatment, a laser beam irradiation treatment and/or a treatment with a bonding aid.

The present invention is further directed to a method for producing a carbon molded article having a hollow portion, comprising the steps of: (1) fixing an injection molded article (a) made of a phenol resin at a position (predetermined bonding position) formed with a mold; (2) mounting and moving an injection molded article (b) made of a phenol resin to be bonded to the injection molded article (a) to the predetermined bonding position within the mold; (3) positioning the injection molded article (b) at the predetermined bonding position; (4) optionally subjecting a bonding surface to an ultraviolet ray irradiation treatment, a laser beam irradiation treatment and/or a treatment with a bonding aid; (5) closing the mold for bonding, and (6) calcinating an obtained molded article in an inert gas atmosphere.

### Brief Description of Drawings

Figure 1 is a schematic view showing a micro-pump ejecting portion and the structure thereof.
Figure 2 is a schematic view of a mold used in the present invention.
Figure 3 is a view showing the manner in which the mold is operated when the opening/closing port of the mold 20 is opened.
Figure 4 is a schematic view showing the manner in which an upper member and a lower member that are to be bonded to each other are positioned.
Figure 5 is a schematic view showing the state in which the upper member and the lower member are attached after positioning.
Figure 6 is a schematic view showing an inkjet head and the structure thereof.
Figure 7 is a schematic view showing production of an inkjet head.
Figure 8 is a schematic view showing the positioning for making the inkjet head.
Figure 9 is a schematic view showing the state in which an ink chamber and a vibration plate are bonded after positioning.
Figure 10 is a schematic view showing that the parting line of the vibration plate is displaced by a distance P.
Figure 11 is a schematic view showing the state in which the ink chamber and the vibration plate that are set in a bonding position are in contact with each other.
Figure 12 is a schematic view showing the state in which the ink chamber is bonded to the vibration plate.

### Best Mode for Carrying Out the Invention

A method for producing a molded article having a hollow portion of the present invention is characterized in that when bonding an injection molded article (a) and a molded article (b), the injection molded article (a) is fixed at a position (predetermined bonding position, a position where bonding is performed) formed with a mold, the molded article (b) is mounted and moved to this position so as to position the molded article (b) at the predetermined bonding position, and the mold is closed for bonding.

There is no limitation regarding the resin to be used for the injection molded article (a) and the molded article (b) to be bonded thereto, and a thermoplastic resin or a thermosetting resin (e.g., epoxy resin, phenol resin, or unsaturated polyester resin) can be used. It is preferable to use the same resin for the injection molded article (a) and the molded article (b) to be bonded thereto.

The molded article (b) can be a molded article obtained by molding such as extrusion molding, compression molding, injection molding, transfer molding, or blowing molding, but injection molded articles are preferable for efficient integral molding. In particular, it is preferable to perform injection molding with the same resin when molding and bonding are performed in the same mold.

The molded article (b) can be a molded article (b) that is previously molded in another mold. The surface to be bonded of the obtained molded article (b) can be subjected to a pre-treatment suitable for bonding (a treatment with a bonding aid, an ultraviolet ray irradiation treatment, a laser beam irradiation treatment or the like), and then bonded to the injection molded article (a).

Furthermore, a sheet or plate formed by stamping with a die can be used as the molded article (b).

When the injection molded article (a) and an injection molded article (b') are used, in view of bonding efficiency and strength, it is preferable to use the same thermosetting resin, and it is preferable to use a phenol resin. In particular, when forming a carbon molded article, it is preferable to use granular phenol resin. In particular, it is more preferable to use spherical phenol resin, especially, spherical phenol resin having a high sphericity. As described above, in methods in which a high density polycrystal carbon is used to form a carbon molded article or in which a thermosetting resin powder is molded at high pressure by compression molding while being heated and calcinated for carbonization so as to form a carbon molded article, the powder is not filled completely, and bridges occur between particles. Therefore, granular structures, which are contours of powder, tend to occur. The granular structures cause cracks in the molded article or reduce the strength. However, when granular resin is used and is injection-molded, precise filling can be achieved, so that there are no granular structures after calcination, and a strong molded article can be obtained.

The injection molded article (a) and the molded article (b) are bonded by fixing the injection molded article (a) at a position (predetermined bonding position) formed with a mold, mounting and moving the molded article (b) to this predetermined bonding position within the mold so as to be positioned at the predetermined bonding position, and closing the mold. The clamping force occurred by closing the mold is utilized for the bonding.

An adhesive is not necessarily required for the bonding of the injection-molded article (a) and the molded article (b), but a bonding aid can be used, for example, a diluent in which a molding resin is dissolved can be sprayed onto the surface to be bonded, or fine powder of a molding material can be sprayed. When the injection molded article (a) is formed of the same resin as (b), it is preferable to use the same resin as this resin for the bonding aid. The resin is melted and fused when bonding, so that strong bonding can be obtained.

When a releasing agent is used when molding, the releasing agent may be deposited at the bonding surface (a surface to be bonded), which may prevent the bonding. Therefore, the bonding surface may be subjected to a treatment such as laser beam irradiation, ultraviolet ray irradiation or a treatment with methylene dichloride (bonding aid) to remove the releasing agent, and thereafter the mold may be clamped and the clamping force may be utilized.

It is preferable to use a method that ensures releasing a mold by subjecting the mold to a surface treatment such as Teflon plating for mold releasing or a Teflon sputtering treatment. This is because this eliminates the need of adding a releasing agent in an amount that may prevent bonding.

The clamping force of the mold may be sufficient for pressure for the bonding of the injection molded article (a) and the molded article (b), but it is preferable to use pressure of ejecting pins, pressure of a piezo device set in the mold, or pressure by external pressure generating means connected to the mold so that external pressure can be applied uniformly into the bonding surface.

If a piezo device, which is associated with ultrasonic wave vibration, is used, frictional heat is generated on the bonding surfaces of the two molded articles (a) and (b) that have not completely cured yet after molding, and further the two bonded layers are contacted and rubbed well by vibration so as to be fused, which allows strong bonding with excellent sealing performance.

If excessive force is applied during bonding, it is preferable to release pressure on the parting surface of the mold. In this method, for example, the parting line of the mold is also provided on the side of the mold of the injection molded article (b'). Thus, the injection molded article (a) projects the parting surface during bonding, and therefore a pressure that is high enough to cause deformation of the resin is not applied, even if excessive force is applied, so that this is an advantageous method.

If both the injection molded article (a) and the molded article (b) are injection molded articles formed of a phenol resin of spherical particles having a high sphericity, the phenol resin is filled finely, and when this is calcinated, since granular structures are not formed. a carbon molded article having strong bonds can be obtained. Calcination is performed under an inert gas atmosphere. Prior to calcination, the shape may be corrected. Correction can be performed by pressing with a heated mold or a heated tool.

There is no particular limitation regarding the inert gas used for calcination, as long as it does not react with carbon at high temperature. However, argon gas, nitrogen gas or the like is preferable in terms of availability. The phenol resin is calcinated at 500 to 2000°C. The carbon molded article can be vitreous (a calcinating temperature of about 800°C) or amorphous (a calcinating temperature of about 1500°C), depending on the calcinating temperature of the phenol resin. To obtain an amorphous carbon molded article, it is preferable that the temperature is increased at 30 to 70°C/min. Preferably, calcination is performed at 1500 to 1600°C at a temperature increase speed of 50°C/min. The calcination provides a molded article that has chemical resistance, heat resistance, biochemical stability and an improved chemical strength.

When a phenol resin is used, granular phenol resin is preferable, and among granular phenol resin, a spherical one is more preferable. A phenol resin of particles having a high sphericity may be used. The granular phenol resin can be obtained by suspension polymerization. The particle size of the resin is 2 to 500 µm, preferably 5 to 50 µm, and most preferably 5 to 10 µm.

The carbon molded article obtained by calcination is shrinked and made small. Using the phenol resin is advantageous for the following reasons: the molded article can be large in the process from injection molding to bonding, and the bonding area can be large, so that handling is easy; and it becomes small after calcination so that a fine and precise product can be produced.

The bonding method of the present invention is directed to a bonding which is done within one mold. The method comprises: resin is filled in a mold by injection; then the mold is open when molding is conducted to a certain extent; and then a molded article is bonded to another member. If a bonding aid is used, the molded articles can be bonded each other even after the molding resin has been cured to a significant extent after the molding resin is filled into the mold. Furthermore, since the molded articles are bonded each other using a mold during molding, there is no size discrepancy due to shrinkage after molding or displacement of the bonding, which might occur in a conventional method in which the mold article is removed from the mold, cooled, and then bonded. Furthermore, since an adhesive is not necessarily required, problems (production of burr, deterioration of sealing performance) that might occur when an adhesive is used do not occur.

The bonding method of the present invention allows ultra precise bonding that requires precise (bonding width of 100µm or less) and complete sealing, such as a micropipetter or bonding between ink compartments of a head of an on-demand inkjet printer and a vibration plate. Thus a bonded molded article having a hollow portion with a complete sealing can be obtained in a simple manner.

Furthermore, when comparing the bonding method of the present invention with compression molding, the compression molding does not allow the resin to flow in a fine portion, whereas the injection molding can produce a molded article having a complex shape easily because the resin is melted completely and injected into a mold by applying pressure. In addition, components made of carbon molded articles having the same shape can be mass-produced by the processes subsequent to the present invention.

### Example

Hereinafter, the present invention will be described by way of example, but the present invention is not limited by the examples.

### (Example 1: Production of a micro-pump ejecting portion)

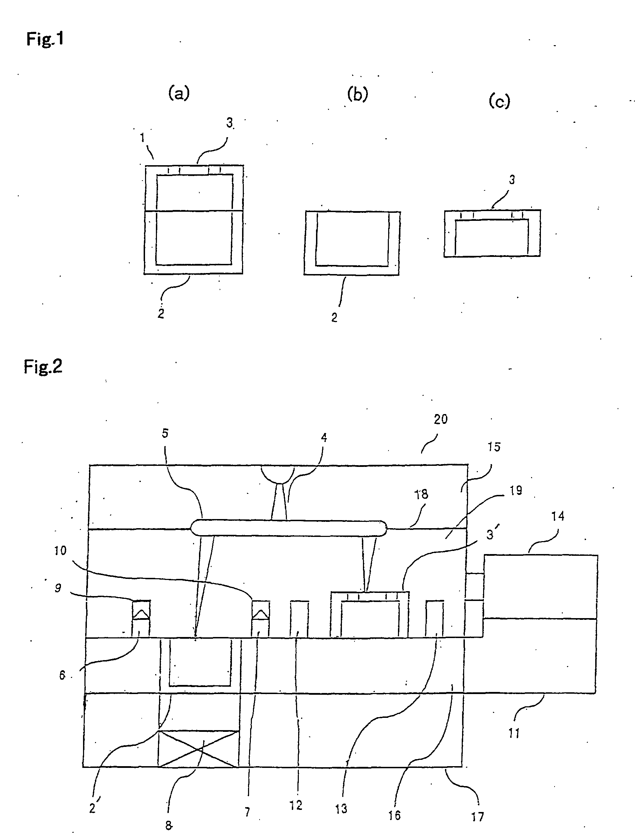

Production of a micro-pump ejecting portion of a small amount droplet ejecting apparatus will be described with reference to Figures 1 to 5. A micro-pump ejecting portion 1 shown in Figure 1(a) includes a lower member 2 shown in Figure 1(b) and an upper member 3 shown in Figure 1(c). The upper member 3 having a microscopic structure of Figure (c) can be obtained as a mold by, for example, engaging a molding piece produced by a LIGA process to a mold and performing injection molding. The molding piece also can be produced by using discharge processing, cutting processing or a combination thereof, instead of the LIGA process.

First, a mold 20 used for the present invention will be described with reference to Figure 2. The mold 20 includes a core base 17, a core 16 provided on the core base 17, an upper mold 15 and a die 19. Pressure generating means 8 is provided in a portion of the core base 17 that is in contact with a mold 2' for the lower member 2 provided in the core 16. Furthermore, reference pins 6 and 7 for positioning are provided on both sides of the mold 2' for the lower member 2, and are inserted into and engaged with engagement holes 9 and 10 that are provided in the die 19 for positioning.

In the upper mold 15, a sprue 4 and a runner 5 through which a resin is injected are provided removably, and supply the resin to a mold 3' of the upper member 3 provided in the die 19 and the mold 2' for the lower member 2. Furthermore, engagement holes 12 and 13 for positioning are provided on both the sides of the mold 3' of the upper member 3. The engagement holes 12 and 13 are provided with the same gap and the same size as those of the engagement holes 9 and 10. Therefore, the reference pins 6 and 7 are inserted into and engaged with the engagement holes 12 and 13. The molds 2' and 3' are formed such that resins molded with the molds are bonded by pressing at a precise position so as to form a precise molded article.

The upper mold 15 has an opening/closing port 18, and the die 19 is lifted by opening the opening/closing port 18, and accordingly the engagement holes 9 and 10 are lifted and the reference pins 6 and 7 are exposed. The die 19 is connected to an actuator 14 connected to driving means 11. The die 19 is moved to the left in Figure 2, so that the engagement holes 12 and 13 are moved to the positions of the reference pins 6 and 7 and the opening/closing port 18 is closed, and thus the reference pins 6 and 7 are inserted into and engaged with the engagement holes 12 and 13.

A method for producing the micro-pump ejecting portion 1 shown in Figure 1 with the mold 20 having such a structure will be described next.

First, a thermosetting resin is injected to the mold 3' of the upper member 3 provided in the die 19 and the mold 2' for the lower member 2 through the sprue 4 and the runner 5 shown in Figure 2. The mold 2' for the lower member 2 is located at a fixed position and the pressure generating means 8 is provided below the mold 2', if necessary. The lower member 2 is not necessarily removed from the mold and fixed at a molded position (predetermined bonding position).

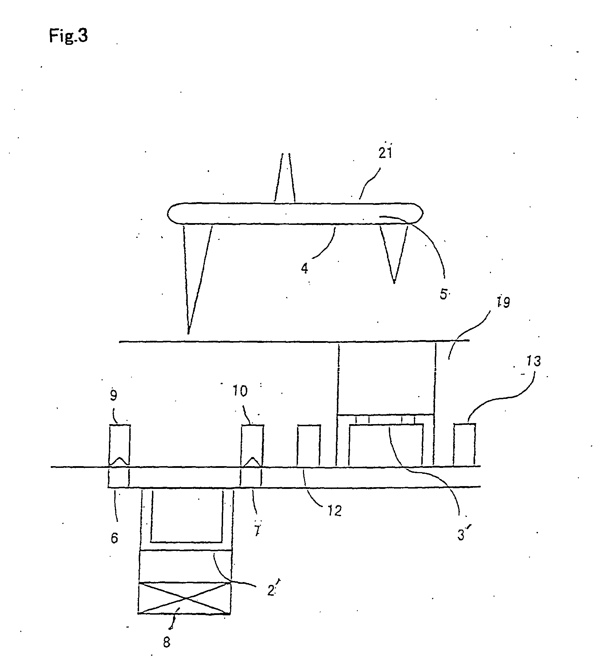

After the resin is injected, the opening/closing port 18 of the upper mold 15 is opened, so that the die 19 is lifted, as shown in Figure 3. The lifting of the die 19 lifts the engagement holes 9 and 10, and the reference pins 6 and 7 are exposed from the engagement holes 9 and 10. At this point, a runner gate 21 constituted by the sprue 4 and the runner 5 that are provided removably is removed.

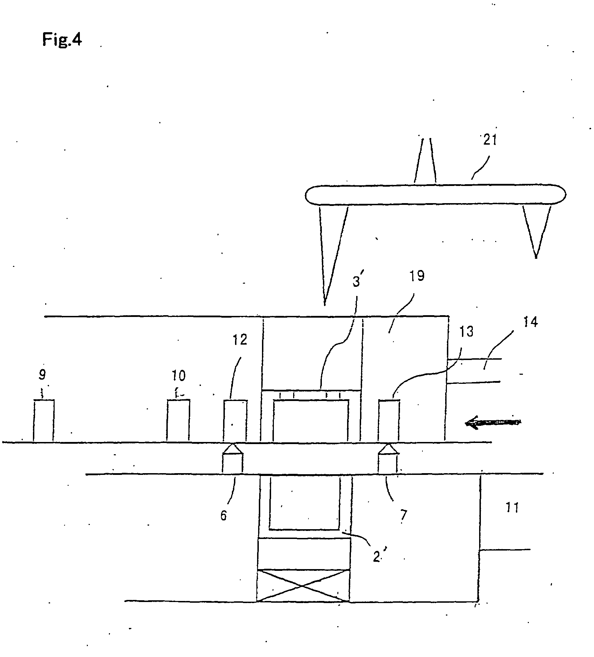

Then, as shown in Figure 4, the die 19 is moved by the actuator 14 in the direction shown by the arrow (from the right to the left in Figure 4), and the engagement holes 12 and 13 are positioned at the positions of the reference pins 6 and 7, respectively. That is, positioning is performed.

When the engagement holes 12 and 13 are positioned at the positions of the reference pins 6 and 7, respectively, the opening/closing port 18 of the mold 15 is closed, as shown in Figure 5. When the opening/closing port 18 is closed, the reference pins 6 and 7 are inserted into and engaged with the engagement holes 12 and 13 so that the upper molded article 3 and the lower molded article 2 are bonded under pressure at a precise position and thus a molded article is formed. These bonded articles are heated so as to be bonded, so that the micro-pump ejecting portion 1 shown in Figure 1(a) can be obtained.

The obtained micro-pump ejecting portion 1 is calcinated, if necessary, and thus a carbon molded article having a hollow portion is obtained. The carbon molded article obtained by calcination has chemical resistance, heat resistance, biochemical stability and an improved mechanical strength.

### (Example 2: Production of an ultra precise inkjet head)

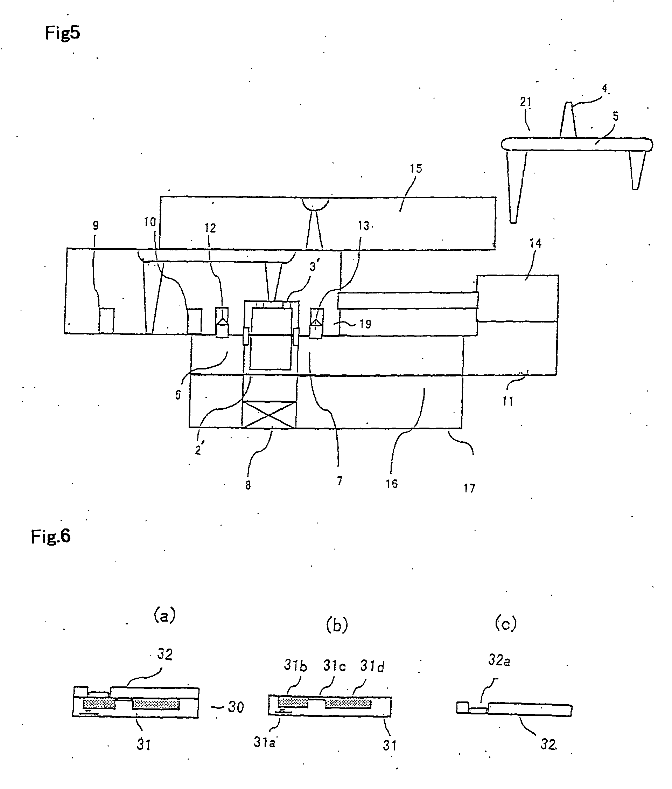

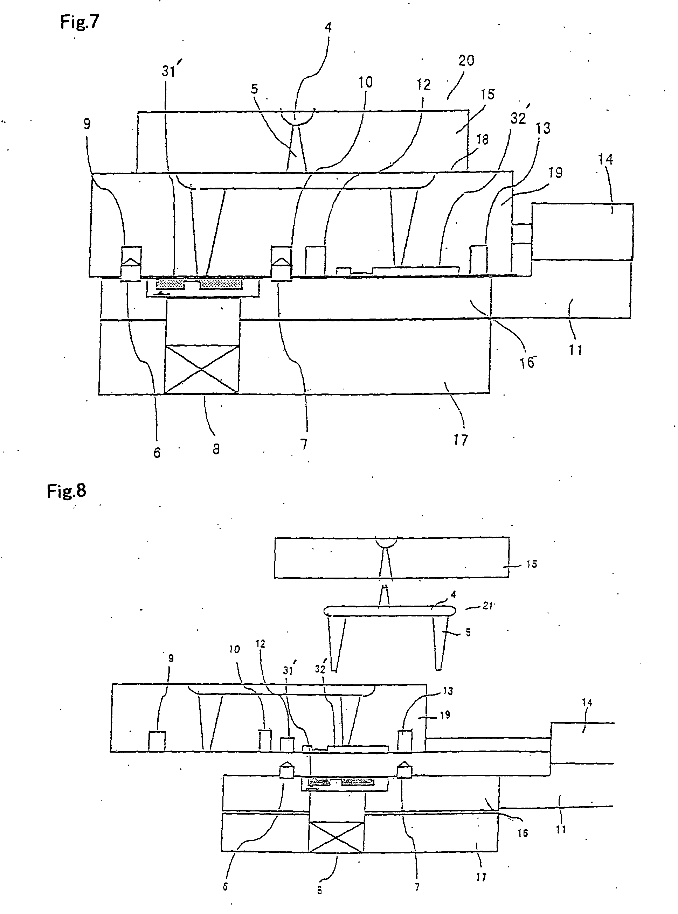

A method for producing an ultra precise inkjet head as shown in Figure 6 with an apparatus as shown in Figure 7 will be described with reference to Figures 7 to 12. An inkjet head 30 of Figure 6(a) is an ultra precise inkjet head, and includes an ink chamber 31 (Figure 6(b)) and a vibration plate 32 (Figure 6(c)). The ink chamber 31 has a nozzle 31a, an ink compartment 31b, a restrictor 31c, and an ink supply compartment 31d. The diameter of the nozzle 31a is 20 to 50 µm. The size of the ink compartment 31b is about 1 mm x 0.1 mm x 0.1 mm. The restrictor 31c is very small, such as about 0.03 mm in the width and about 0.03 mm in the depth. The vibration plate 32 has a foot portion 32a. The inkjet head 30 is produced by molding an ink chamber 31, which is used for printing by filling ink in such a small space, with a resin, and bonding it to the vibration plate 32 (32a denotes the foot portion) within the mold.

First, a mold shown in Figure 7 will be described. Figure 7 shows substantially the same apparatus as in Figure 2 and is an apparatus for molding by injecting a resin to a mold 31' of the ink chamber 31 and a mold 32' of the vibration plate 32 through a sprue 4 and a runner 5 that are provided removably. Reference pins 6 and 7 for positioning are provided on both sides of the mold 31' for the ink chamber 31, and are inserted into and engaged with engagement holes 9 and 10 that are provided in the die 19 for positioning. Engagement holes 12 and 13 for positioning are provided on both the sides of the mold 32' of the vibration plate 32. The engagement holes 12 and 13 are provided with the same gap and the same size as those of the engagement holes 9 and 10. Therefore, the reference pins 6 and 7 are inserted into and engaged with the engagement holes 12 and 13. The molds 31' of the ink chamber 31 and a mold 32' of the vibration plate 32 are formed such that the ink chamber 31 and the vibration plate 32 molded with the corresponding molds are bonded under pressure at a precise position so as to form a precise molded article.

The upper mold 15 has an opening/closing port 18, and the die 19 is lifted by opening the opening/closing port 18, and accordingly the engagement holes 9 and 10 are lifted and the reference pins 6 and 7 are exposed. The die 19 is connected to an actuator 14 connected to driving means 11. The die 19 is moved to the left in Figure 7, so that the engagement holes 12 and 13 are moved to the positions of the reference pins 6 and 7. Then, the opening/closing port 18 is closed, and thus the reference pins 6 and 7 are inserted into and engaged with the engagement holes 12 and 13 and the mold 32' of the vibration 32 is positioned.

Hereinafter, a method for producing an ultra precise inkjet head 6 will be described with reference to Figures 7 to 12. A thermosetting resin is injected to the mold 31' of the ink chamber 31 provided in the die 19 and the mold 32' of the vibration plate 32 through the sprue 4 and the runner 5 shown in Figure 7. The mold 31' of the ink chamber 31 is located at a fixed position and the pressure generating means 8 is provided below the mold 31', if necessary. The ink chamber 31 is not necessarily removed from the mold and fixed at a molded position (predetermined bonding position).

After the resin is injected, as shown in Figure 8, the opening/closing port 18 is opened, so that the die 19 is lifted, and the reference pins 6 and 7 are released from the engagement holes 9 and 10. A runner gate 21 constituted by the sprue 4 and the runner 5 is removed, and then the actuator 14 is operated such that the die 19 is slid to the left in the drawing, and the die 19 is moved such that the engagement holes 12 and 13 provided in the die 19 are positioned at the positions of the reference pins 6 and 7. That is, positioning is performed.

Although not shown in the drawings, the die 19 is provided with a guide that operates with good precision such as a dovetail groove.

The die 19 is moved to a predetermined position, and the opening/closing port 18 is closed and the mold is clamped again, so that the reference pins 6 and 7 are inserted into and engaged with the engagement holes 12 and 13, and thus the ink chamber 31 and the vibration plate 32 are bonded. Thereafter, bonding is performed with an appropriate pressure and optionally the pressure generating means 8.

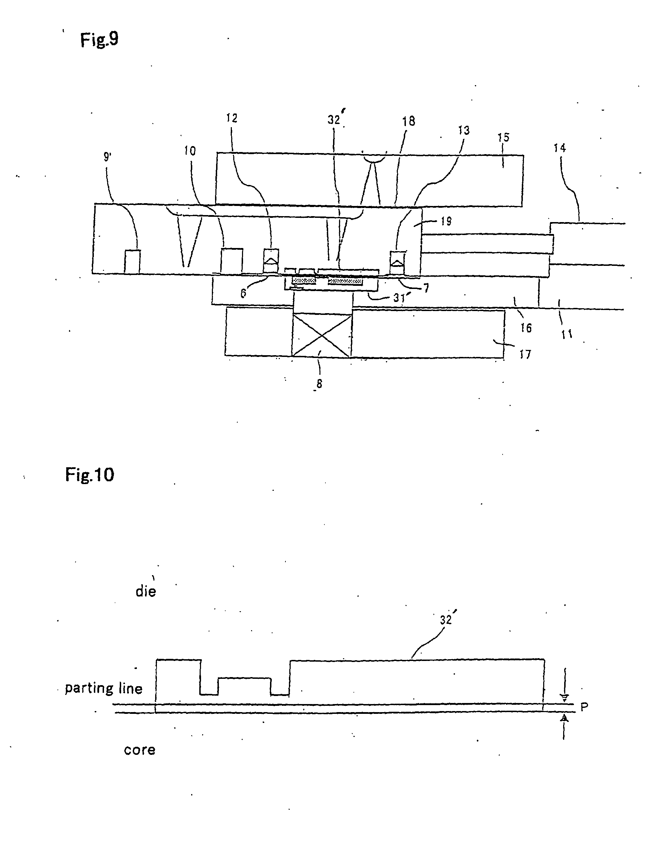

In this bonding, in order to apply sufficient pressure onto the bonding surface (surface to be bonded), as shown in Figure 10, the parting line of the vibration plate 32 is shifted to the side of the die by a distance P. That is, the parting line is shifted upward by P in Figure 10. The distance is generally 5 to 15 µm, but is not limited thereto.

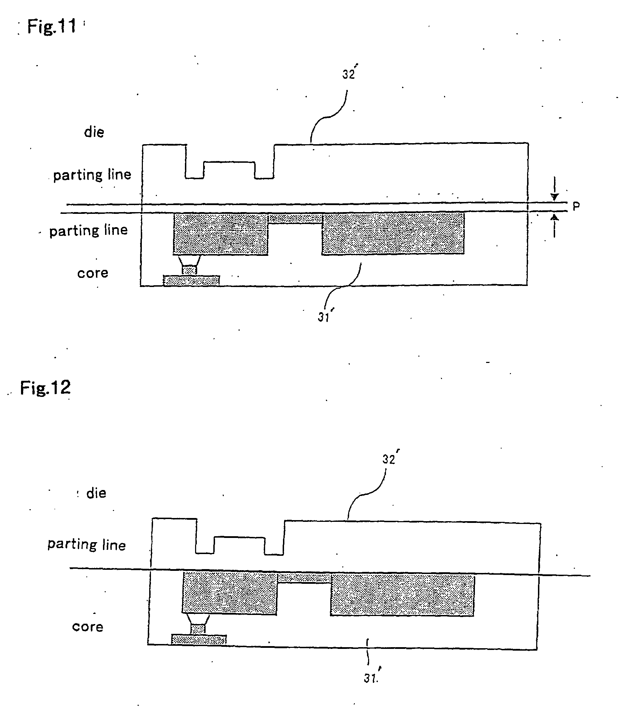

Figure 11 shows that the ink chamber 31 and the vibration plate 32 are set in the bonding position and in contact with each other. The parting line of the vibration plate 32 is shifted upward by a distance P, so that only the generated projection P constitutes bonding pressure, and a compression deformation also corresponds to that extent. In other words, when bonding pressure is applied by the clamping force of the mold, surplus pressure generated by the clamping force of the mold is completely absorbed at the contact portion of the die and the core, so that the force actually applied onto the contacting surfaces of the ink chamber 31 and the vibration plate 32 during bonding becomes an appropriate pressure and unwanted deformation does not occur. Furthermore, pressure such as pressure generated by ejecting operation and pressure generated by a piezo device is applied by the external pressure generating means 8, so that bonding can be achieved with an appropriate pressure.

This method allows fine bonding of about 30 µm of a very fine space and an area for bonding and ensures complete sealing performance.

The obtained ultra precise inject head can be formed into a carbon molded articles by calcination, as in Example 1.

### (Example 3)

With a phenol resin (product name Bell Pearl S890 manufactured by Kanebo, Ltd.) and the apparatus shown in Figure 2, the operation of Example 1 was performed so that a micro-pump ejecting portion 1 was produced. The injection molding temperature was 120°C. The temperature was raised to 1600°C at a temperature increase speed of 50°C/min in an argon atmosphere, and calcination was performed at 1600°C for two hours. Cooling was performed at a cooling speed of 10°C /min. This calcination caused shrinkage of the micro-pump ejecting portion 1 in a ratio of 20% based on that before calcination. The bulk density after calcination was 1.50 and the pore ratio was 0.

### Industrial Applicability

A conventional bonding method requires two operations to remove molded articles from a mold after molding and to bond the molded articles to form a desired molded article. On the other hand, the method of the present invention allows bonding within a mold, so that bonding can be performed completely in a simple manner. Furthermore, the present invention provides an advantage that a special facility for bonding is not required. Furthermore, during bonding, molded articles to be bonded can be positioned reliably. Therefore, compared with the conventional method of removing molded articles and bonding them, the method of the present invention is very advantageous for bonding of precise and fine portions. Furthermore, when a phenol resin is used, after bonding, further calcinating is performed so that the molded article can be carbonized. The carbon molded article has excellent chemical resistance and biochemical stability and very good heat resistance, and has a great industrial value.

## Claims

1. A method for producing a molded article having a hollow portion comprising the steps of:
(1) fixing an injection molded article (a) at a position (predetermined bonding position) formed with a mold;
(2) mounting and moving a molded article (b) to be bonded to the injection molded article (a) to the predetermined bonding position within the mold;
(3) positioning the molded article (b) at the predetermined bonding position ; and
(4) closing the mold for bonding.

2. The method for producing a molded article having a hollow portion according to claim 1, wherein
the molded article (b) is an injection molded article (b'), and
a predetermined bonding surface of the injection molded article (a) or (b') is projected so that a pressure during bonding is sufficiently transmitted to the predetermined bonding surface, and an excessive pressure is released at a parting surface of the mold.

3. The method for producing a molded article having a hollow portion according to claim 2, wherein
the pressure during bonding is pressure of an ejecting pin, pressure of a piezo device set within the mold or pressure by external pressure generating means connected to the mold.

4. The method for producing a molded article having a hollow portion according to any one of claims 1 to 3, further comprising the step (5) of subjecting a bonding surface to an ultraviolet ray irradiation treatment, a laser beam irradiation treatment and/or a treatment with a bonding aid.

5. A method for producing a carbon molded article having a hollow portion, comprising the steps of:
(1) fixing an injection molded article (a) made of a phenol resin at a position (predetermined bonding position) formed with a mold;
(2) mounting and moving an injection molded article (b) made of a phenol resin to be bonded to the injection molded article (a) to the predetermined bonding position within the mold;
(3) positioning the injection molded article (b) at the predetermined bonding position;
(4) optionally subjecting a bonding surface to an ultraviolet ray irradiation treatment, a laser beam irradiation treatment and/or a treatment with an attachment-aiding agent;
(5) closing the mold for bonding, and
(6) calcinating an obtained molded article in an inert gas atmosphere.

## Amended claims

### Amended claims under Art. 19.1 PCT

**1.** (Amended) A method for producing a molded article having a hollow portion comprising the steps of:
(1) injecting a resin into a mold (a) having an engagement hole for positioning so as to form an injection molded article (a);
(2) injecting a resin into a mold (b) having a reference pin for positioning so as to form an injection molded article (b);
(3) moving the mold (b) so as to position the reference pin of the mold (b) at a position at which the pin can be engaged with the engagement hole of the mold (a); and
(4) inserting the reference pin into the engagement hole for engagement so as to bond the injection molded article (a) and the injection molded article (b) by pressure of a piezo device.

**2.** The method for producing a molded article having a hollow portion according to claim 1, wherein
a predetermined bonding position of the injection molded article (a) or (b) is projected so that a pressure during attachment is sufficiently transmitted to the predetermined bonding position, and an excessive pressure is released at a parting surface of the mold.

**3.** (Cancelled)

**4.** (Amended) The method for producing a molded article having a hollow portion according to claim 1 or 2, further comprising the step (5) of subjecting a bonding surface to an ultraviolet ray irradiation treatment, a laser beam irradiation treatment and/or a treatment with a bonding aid.

**5.** (Amended) A method for producing a carbon molded article having a hollow portion comprising the steps of:
(1) injecting a phenol resin into a mold (a) having an engagement hole for positioning so as to form an injection molded article (a);
(2) injecting a phenol resin into a mold (b) having a reference pin for positioning so as to form an injection molded article (b);
(3) moving the mold (b) so as to position the reference pin of the mold (b) at a position at which the pin can be engaged with the engagement hole of the mold (a); and
(4) inserting the reference pin into the engagement hole for engagement so as to bond the injection molded article (a) and the injection molded article (b) by pressure of a piezo device, and optionally subjecting a bonding surface to an ultraviolet ray irradiation treatment, a laser beam irradiation treatment and/or a treatment with an attachment-aiding agent; and
(5) calcinating an obtained molded article in an inert atmosphere.

**6.** The method according to claim 5, wherein the carbon molded article is an inkjet head.
